# EUROPEAN PATENT APPLICATION

(11) **EP 4 787 772 A1**
(43) Date of publication of application: **05.08.2026**
(21) Application number: 25155387.1
(22) Date of filing: 31.01.2025
(51) Int. Cl.: H04L 9/08

(54) **ANALYZING METHOD AND MODULE FOR A QUANTUM KEY DISTRIBUTION NETWORK**

(71) Applicant: Deutsche Telekom AG, 53113 Bonn (DE)
(72) Inventor: GUNKEL, Matthias, 64291 Darmstadt (DE); FÜRST, Volker, 64297 Darmstadt (DE); BÖHN, Robin, 64295 Darmstadt (DE)
(74) Representative: RDL Patentanwälte PartG mbB

(57) **Abstract**

A method for analyzing a quantum key distribution network, QKDN, wherein a QKDN analyzer module measures a key system attribute, KSA, of the QKDN and/or checks a functionality of the QKDN; a QKDN analyzer device for analyzing a QKDN, QKD nodes for a QKDN, a QKDN and a computer program product.

## Description

The invention relates to a method for analyzing a quantum key distribution network, QKDN, wherein a QKDN analyzer module measures a key system attribute of the QKDN and/or checks a functionality of the QKDN. The invention further relates to a QKDN analyzer device for analyzing a QKDN, QKD nodes for a QKDN, a QKDN and a computer program product.

Quantum key distribution networks, QKDN, have to be analyzed immediately after having been established and to be maintained while they are operated. An analysis of a QKDN usually comprises measurements of a performance of the QKDN and checks of functionalities of the QKDN. Each QKDN comprises at least two and generally a plurality of QKD nodes.

Commercially available applications, e.g., encryptors connected to the QKDN and consuming quantum keys are usually not adapted to analyze the QKDN. They indeed request keys from the QKDN. However, the keys are requested at a relatively low rate which is insufficient for measuring the performance of the QKDN.

Apart from that, said applications do not form part of the QKDN. Rather are they external in relation to the QKDN. Particularly, they are required to reside outside a security area of the QKDN for protecting the QKDN from a malicious manipulation. Such an application, hence, can only access a key management system, KMS, of a QKD node via an application interface provided by the KMS the application is connected to. But the application is excluded from accessing further entities of the QKDN or knowing a topology of the QKDN. In other words, the application cannot see the QKDN as a whole.

The key system attributes are performance observables which must be measurable and support testing and evaluating the QKDN. The key system attributes are important to operating the QKDN properly and may be abbreviated by the acronym KSA. As the acronym KSA is ambiguous, the term is written-out in full herein. However, the key system attributes are not critical enough to be designated as key performance parameters, KPP.

It is, therefore, an object of the invention to suggest a method for testing a QKDN which allows for efficiently and flexibly both analyzing the QKDN and checking a functionality of the QKDN. Further objects of the invention are to provide a QKDN analyzer device for analyzing a QKDN, QKD nodes for a QKDN, a QKDN and a computer program product.

A first aspect of the invention is a method for testing a quantum key distribution network, QKDN, wherein a QKDN analyzer module measures a key system attribute of the QKDN and/or checks a functionality of the QKDN. The QKDN analyzer module is a functional entity which may be implemented as a software executed by a hardware and/or as a hardware.

According to the invention, a first QKDN analyzer module is connected to an application interface of a key management system, KMS, of a first QKD node of a QKDN and the QKDN analyzer module requests a plurality of keys from the KMS and measures, as a key system attribute, a delivery success rate of the requested keys. The measured delivery success rate indicates a ratio of a number of keys successfully delivered over a number of keys requested. The keys may be exemplarily used for encrypting data and more precisely referred to as encryption keys in the exemplary usage. Measuring the delivery success rate of the QKD node requires a single QKDN analyzer module. Carrying out this kind of measurement the QKDN analyzer module is operated as a key sink. Operated as a key sink, the QKDN analyzer module may subject the QKDN to a load test.

Preferably, the first QKDN analyzer module requests the keys at varying request rates and/or as single keys and/or as a stream of keys and/or the first QKDN analyzer module requests keys having varying key lengths and/or varying key properties. The request rates may vary in a range from 1 key/minute up to 100,000 keys/minute. The requested keys may have lengths of 64 bit, 128 bit, 256 bit or 384 bit. A single key may be requested according to ETSI 014. The stream of keys may be requested according to ETSI 004. Of course, requests of the QKDN analyzer module may have a defined pattern, e.g., all keys are requested to have the same length or the keys are requested to have different lengths randomly distributed or the keys are requested at times according to a Poisson distribution. The QKDN analyzer module may allow for being configured in order to emulate one or more than one, i.e., a plurality of applications connected to the KMS.

In an embodiment, a second QKDN analyzer module is connected to an application interface of a KMS of a second QKD node of the QKDN and to the first QKDN analyzer module. The terms "first" and "second", herein, are chosen for distinguishing two identical entities and do not refer to a technical difference. Rather may they be arbitrarily exchanged without departing from the technical teaching set forth herein.

This kind of measurement may be referred to as an end-to-end measurement. An end-to-end measurement requires a synchronicity of the first and second QKDN analyzer modules. The required synchronicity of the first and second QKDN analyzer modules may be based on an intrinsic synchronicity of QKD nodes provided by a precise clock signal. The first and second QKDN analyzer modules may access the precise clock signal of the first and second QKD nodes.

The first and second QKDN analyzer modules may cooperatively measure, as key system attributes of the QKDN, a delivery delay, a delivery jitter and/or a loss rate of the requested keys and/or check key IDs and/or verify an enforced delivery route of the keys within the QKDN. The delivery jitter is a random variation of the delivery delay. Verification of an enforced key route requires a "key tracing" feature to be provided by the QKDN.

The first QKDN analyzer module may be connected to an application interface of a KMS of a terminal QKD node or of a relay QKD node as the first QKD node and/or the second QKDN analyzer module may be connected to an application interface of a KMS of a terminal QKD node of a relay QKD node as the second QKD node. In other words, each of the first QKDN analyzer module and the second QKDN analyzer module is connected to an arbitrary QKD node of the QKDN. As a result, each QKD node of the QKDN may be simultaneously analyzed resulting in a most complete analysis and functionality check of the QKDN.

Advantageously, both QKDN analyzer modules are additionally connected to a KMS interface of the respective KMS, to a QKD interface of the respective KMS and/or to a control interface of the respective KMS. Each additional connection allows for a further key system attribute to be measured. This kind of measurement is referred to as an interface test measurement.

The KMS usually has a KMS interface to be connected to by a KMS of a neighboring QKD node. The KMS interface, hence, is an interface to be externally connected to. The KMS usually has a QKD interface to be connected to a QKD device, the QKD device providing the KMS with quantum keys. The QKD interface, hence, is an internal interface of the QKD node. The invention is not immediately related to QKD devices, i.e., a quantum partition of the QKDN.

Apart from that, the KMS usually has a control interface to be connected to by a QKDN controller controlling each QKD node of the QKDN during an operation of the QKDN. The control interface, hence, is an interface to be externally connected to.

The first and second QKDN analyzer modules may cooperatively measure, as key system attributes of the QKDN, a key store filling degree, a synchronicity of key stores of neighboring KMSs, a quantum key delivery rate, a success rate of forwarding the requested keys, a performance of a QKDN controller connected to the control interface. Each KMS usually comprises a key store temporarily storing quantum keys provided by the QKD device. The quantum key delivery rate indicates a number of quantum keys provided within a time unit. The success rate of forwarding only applies for relay QKD nodes. The performance of the QKDN controller may exemplarily comprise a correctness of detected key store filling degrees, the filling degrees providing a metric for routing the keys. The performance of the QKDN controller may also comprise a correctness of routes computed by the QKDN controller and a correctness of assigning keys to the computed routes and relaying keys along the computed routes.

The QKDN analyzer module may particularly receive logging information usually provided by the KMS and store the received logging information in a database. The logging information may be searched by querying the database. The database may further generate graphical representations of the logging information to be visually evaluated. Thus, the QKDN analyzer module is used as an ag-gregator of logging information, the aggregated logging information optionally displayed to a person analyzing the QKDN.

At least one of the first and second QKDN analyzer modules may further be connected to a secure inspection interface of the respective KMS. The KMS may have a secure inspection interface to access data within the KMS. On the one hand, the secure inspection interface allows for analyzing the QKDN more in detail and/or more precisely. On the other hand, the KMS might be maliciously manipulated via the secure inspection interface even in case the inspection interface is secured against a malicious manipulation. However, the secure inspection interface may be available only when establishing the QKDN and be irreversibly deactivated for a normal operation of the QKDN. This kind of measurement may be referred to as an interception measurement.

The at least one QKDN analyzer module advantageously checks, as a functionality of the QKDN, a processing of quantum keys within the respective KMS.

Checking the processing may comprise checking a polling of quantum keys, a storing of quantum keys, an ageing of quantum keys and a forwarding of quantum keys. The ageing of quantum keys may result in an automatic removal of quantum keys after a predetermined lifetime. The forwarding of quantum keys comprises selecting correct transport keys and correctly directing an encrypted KMS key.

Another object of the invention is a quantum key distribution network, QKDN, analyzer device for analyzing a QKDN, comprising a computing device. The QKDN analyzer device is separate from the QKDN and may be connected to a QKD node of the QKDN.

According to the invention, the computing device comprises a QKDN analyzer module configured for carrying out a method according to an embodiment of the invention for analyzing the QKDN. The QKDN analyzer device allows for efficiently and flexibly both analyzing the QKDN and checking a functionality of the QKDN when being connected to an interface of a KMS of a QKD node of the QKDN. The QKDN analyzer device may be readily transferred from one QKD node to another QKD node of the QKDN and even from one QKDN to another QKDN.

A third object of the invention is a quantum key distribution, QKD, node for a QKDN, comprising a computing device with a key management system, KMS. The QKD node usually has a cabinet enclosing the computing device with the KMS and the QKD device. The cabinet is configured for preventing the KMS and the QKD device from being maliciously manipulated, e.g., for interception.

According to the invention, the computing device comprises a QKDN analyzer device according to the invention. The QKDN analyzer device is arranged within the cabinet of the QKD node and, hence, also prevented from being maliciously manipulated, i.e., the QKDN analyzer device is integrated in the QKD node.

Due to the integration, the QKD node can be analyzed at any time without taking any further action.

A fourth object of the invention is a quantum key distribution, QKD, node for a QKDN, comprising a virtual machine, VM, with a key management system, KMS.

According to the invention, the virtual machine comprises a QKDN analyzer module configured for carrying out a method according to an embodiment of the invention for analyzing the QKDN. The QKDN analyzer module does not use a separate computing device but benefits from the computing device arranged in the cabinet of the QKD node and executing the virtual machine.

A fifth object of the invention is as quantum key distribution network, QKDN. The QKDN comprises a plurality of QKD nodes, the QKD nodes generally comprising terminal QKD nodes having a single neighboring QKD node and relay QKD nodes having at least two neighboring QKD nodes.

According to the invention, the QKDN comprises a QKD node according to the invention. At least one QKD node, preferably each QKD node, of the QKDN comprises a QKDN analyzer module. Due to the at least one QKD node analysis of the QKDN may be done efficiently and a functionality of the QKDN may be checked efficiently.

A sixth object of the invention is a computer program product, comprising a digital storage medium storing a program code. The digital storage medium is chosen from the group comprising a compact disk, CD, a digital versatile disk, DVD, a hard disk, HD, a random access memory, RAM, chip, a universal serial bus, USB, stick, a cloud storage and the like.

According to the invention, the program code causes a computing device to execute a quantum key distribution network, QKDN, analyzer module carrying out a method according to an embodiment of the invention for analyzing a QKDN when being executed by a processor of the computing device, the QKDN analyzer module being connected to a key management system, KMS, of a QKD node of the QKDN. The QKDN analyzer module is connected at least to an application interface of the KMS and may further be connected to a KMS interface, a QKD interface and/or a secure inspection interface of the KMS. The computing device executing the program code provides a QKDN analyzer module allowing for efficiently and flexibly analyzing the QKDN and checking a functionality of the QKDN.

An essential advantage of the inventive method is that it allows for efficiently and flexibly both analyzing the QKDN and checking a functionality of the QKDN. Another advantage is that the method can be implemented in different configurations of the QKDN.

It shall be understood that the features described previously and to be described subsequently may be used not only in the indicated combinations but also in different combinations or on their own without leaving the scope of the present invention.

The invention is described in detail by means of exemplary embodiments and with reference to the drawings. Like components are indicated by like reference numerals throughout the drawings.
- Fig. 1: schematically shows an entity diagram of a QKDN according to the state of the art;
- Fig. 2: schematically shows a QKDN analyzer module according to the invention connected to the QKDN shown in fig. 1;
- Fig. 3: schematically shows a detail of the QKDN analyzer module shown in fig. 2 according to a first embodiment of the invention connected to the QKDN shown in fig. 1;
- Fig. 4: schematically shows a detail of the QKDN analyzer module shown in fig. 2 according to a second embodiment of the invention connected to the QKDN shown in fig. 1;
- Fig. 5: schematically shows a detail of the QKDN analyzer module shown in fig. 2 according to a third embodiment of the invention connected to the QKDN shown in fig. 1;
- Fig. 6: schematically shows two QKDN analyzer modules according to the invention connected to the QKDN shown in fig. 1;
- Fig. 7: schematically shows two QKDN analyzer modules according to the invention connected to the QKDN shown in fig. 1;
- Fig. 8: schematically a detail of one QKDN analyzer module shown in fig. 2 according to a fourth embodiment of the invention connected to the QKDN shown in fig. 1.

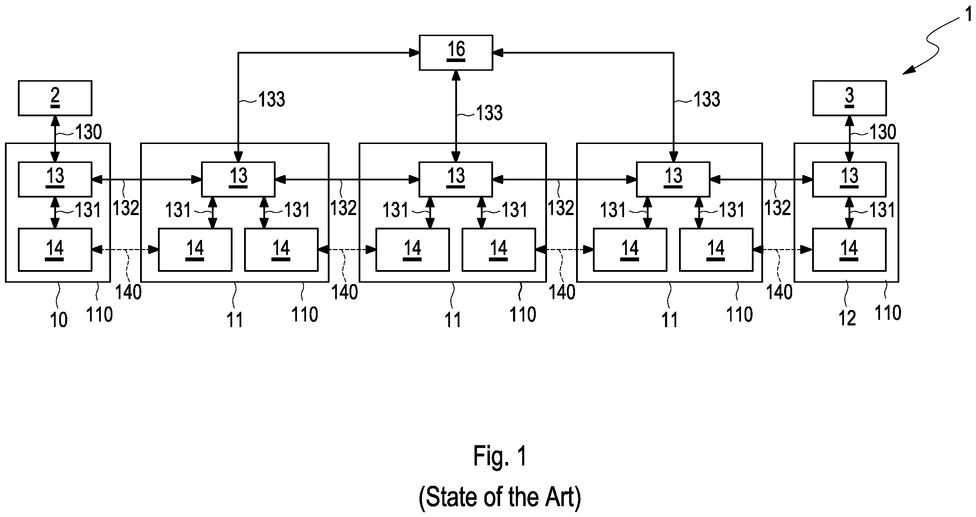

Fig. 1 schematically shows an entity diagram of a QKDN 1 according to the state of the art. The QKDN 1 comprises a first terminal QKD node 10, a plurality of relay QKD nodes 11 and a second terminal QKD node 12. Exemplarily there are three relay QKD nodes 11 linking the first terminal QKD node 10 and the second terminal QKD node 12. Each QKD node 10, 11, 12 comprises a key management system, KMS, 13, a QKD device 14 and a cabinet 110 enclosing the KMS 13 and the QKD device 14 and protecting the QKD node 10, 11, 12 from being maliciously manipulated. The QKDN 1 further comprises a QKDN controller 16 connected to each QKD node 10, 11, 12.

Each KMS 13 comprises an application interface 130 to be connected to by an application, a QKD interface 131 to be connected to by a QKD device 14, a KMS interface 132 to be connected to by a KMS 13 of a neighboring QKD node 10, 11, 12 and a control interface 133 to be connected to by the QKDN controller 16.

Each KMS 13 is connected to by the QKD device 14 of the respective QKD node 10, 11, 12, by KMSs 13 of neighboring QKD nodes 10, 11, 12 and the QKDN controller 16.

The terminal QKD nodes 10, 12 respectively comprise a single QKD device 14 while each relay QKD node 11 comprises at least two QKD devices 14. The QKDN 1 further comprises a QKDN controller 16. As usually, QKD devices 14 of neighboring QKD nodes 10, 11, 12 are linked to each other by respective QKD interfaces 140, i.e., glass fibers.

A first application 2 is connected to the KMS 13 of the first terminal QKD node 10. A second application 3 is connected to the KMS 13 of the second terminal QKD node 12. The first application 2 and the second application 3 are connected to each other. Of course, the first application 2 and the second application 3 may be a frontend and a backend, respectively, of a single distributed application. Apart from that, there may be more than two applications connected to the QKDN 1 which, however, are not illustrated for facilitating a comprehension of the QKDN 1.

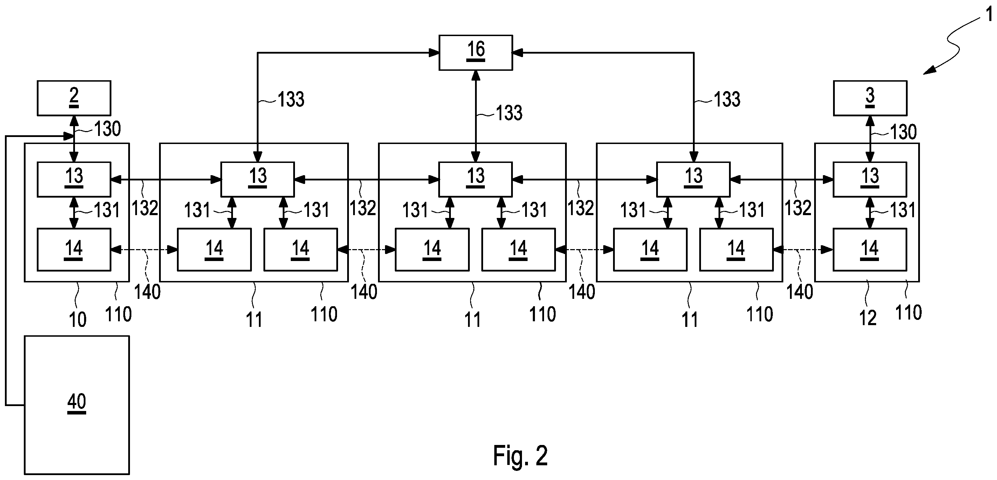

Fig. 2 schematically shows a QKDN analyzer module 40 according to the invention connected to the QKDN 1 shown in fig. 1. The QKDN analyzer module 40 is exemplarily connected to the first terminal QKD node 10 of the QKDN 1. The QKDN analyzer module 40 may generally be implemented by means of a software program product comprising a digital storage medium storing a program code.

The program code causes a computing device to execute the quantum key distribution network, QKDN, analyzer module 40 carrying out a method according to an embodiment of the invention for analyzing the QKDN 1 as follows when being executed by a processor of the computing device, the QKDN analyzer module 40 being connected to a key management system, KMS, 13 of a QKD node 10, 11, 12 of the QKDN 1.

The QKDN analyzer module 40 is connected to the application interface 130 of the key management system, KMS, 13 of the first QKD node 10 of the QKDN 1. This QKDN analyzer module 40 is referred to as a first QKDN analyzer module 40 below.

The first QKDN analyzer module 40 requests a plurality of keys from the KMS 13 and measures, as a key system attribute of the QKDN 1, a delivery success rate of the requested keys. The first QKDN analyzer module 40 preferably requests the keys at varying request rates and/or as single keys and/or as a stream of keys and/or the first QKDN analyzer module requests keys having varying key lengths and/or varying key properties.

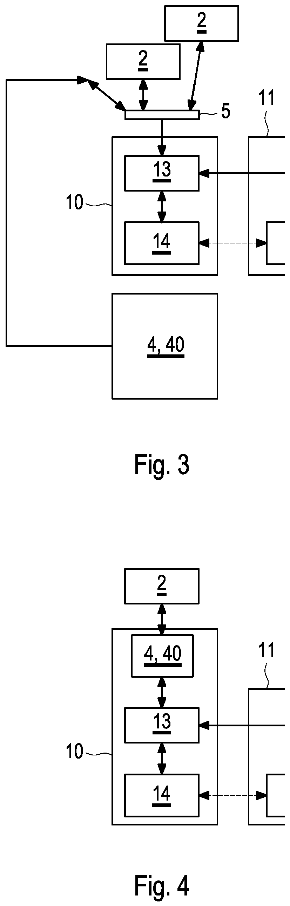

Fig. 3 schematically shows a detail of the QKDN analyzer module 40 shown in fig. 2 according to a first embodiment of the invention connected to the QKDN 1 shown in fig. 1. The QKDN analyzer module 40 is comprised by a QKDN analyzer device 4 according to an embodiment of the invention for analyzing the QKDN 1. The QKDN analyzer device 4 comprises a computing device with the QKDN analyzer module 40 configured for carrying out a method according to an embodiment of the invention for analyzing the QKDN 1. The QKDN analyzer device 4 is separate from the first terminal QKD node 10 and connected to a switch 5. Futhermore, a plurality of applications 2, exemplarily two applications are connected to the switch 5.

Fig. 4 schematically shows a detail of the QKDN analyzer module 40 shown in fig. 2 according to a second embodiment of the invention connected to the QKDN 1 shown in fig. 1. The QKDN analyzer module 40 is comprised by a QKDN analyzer device 4 according to an embodiment of the invention for analyzing the QKDN 1. The QKDN analyzer device 4 comprises a computing device with the QKDN analyzer module 40 configured for carrying out a method according to an embodiment of the invention for analyzing the QKDN 1. The QKDN analyzer device 4 is integrated in the first terminal QKD node 10, i.e. arranged in the cabinet 110 of the first terminal QKD node 10.

Shortly summarized, fig. 4 shows a quantum key distribution, QKD, node 10, according to an embodiment of the invention for the QKDN 1. The QKD node 10 comprises the QKD device 14 and a computing device with both the key management system, KMS, 13 and the QKDN analyzer device 4. With the inventive QKD node 10 the QKDN 1 is a QKDN according to an embodiment of the invention.

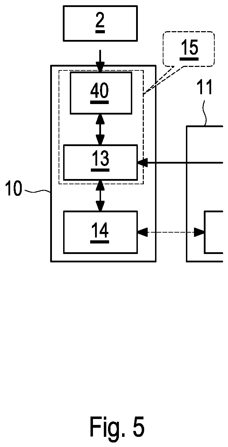

Fig. 5 schematically shows a detail of the QKDN analyzer module 40 shown in fig. 2 according to a third embodiment of the invention connected to the QKDN 1 shown in fig. 1. The QKDN analyzer module 40 is comprised by a virtual machine, VM, 15 of the first terminal QKD node 10.

Shortly summarized, fig. 5 shows a quantum key distribution, QKD, node 10 according to an embodiment of the invention for the QKDN 1. The QKD node 10 comprises a QKD device 14 and the virtual machine 15, VM, with both a key management system, KMS, 13 and the QKDN analyzer module 40. With the inventive QKD node 10 the QKDN 1 is a QKDN according to an embodiment of the invention.

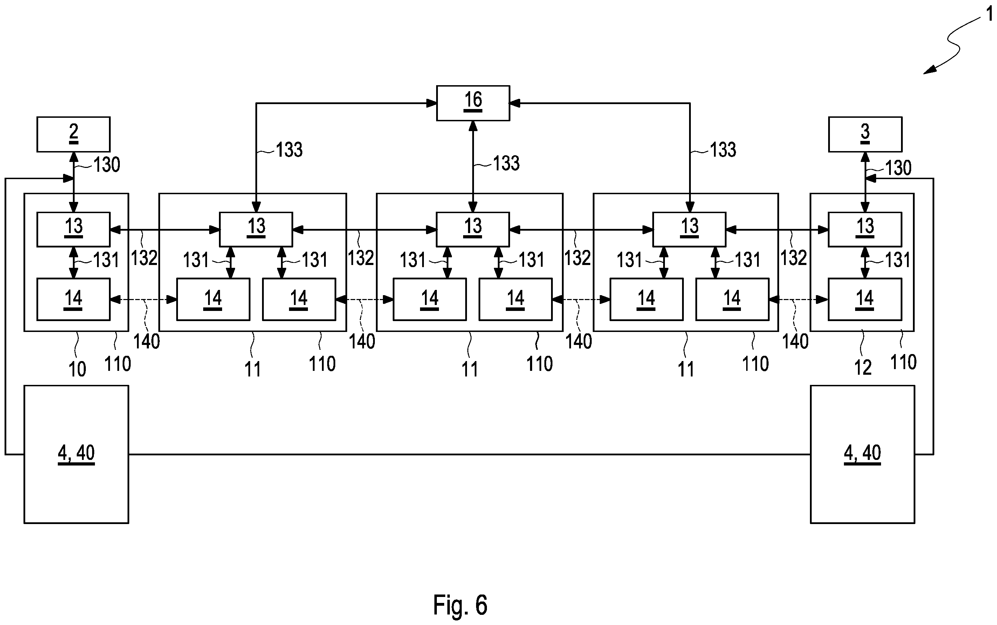

Fig. 6 schematically shows two QKDN analyzer modules 40 according to the invention connected to the QKDN 1 shown in fig. 1.

A second QKDN analyzer module 40 may be connected to the application interface 130 of the KMS 13 of the second terminal QKD node 12 of the QKDN 1 and to the first QKDN analyzer module 40. The second QKDN analyzer module 40 is exemplarily connected to the second terminal QKD node 12 of the QKDN 1.

The first and second QKDN analyzer modules 40 may cooperatively measure, as key system attributes of the QKDN 1, a delivery delay, a delivery jitter and/or a loss rate of the requested keys and/or check key IDs and/or verify an enforced delivery route of the keys within the QKDN 1.

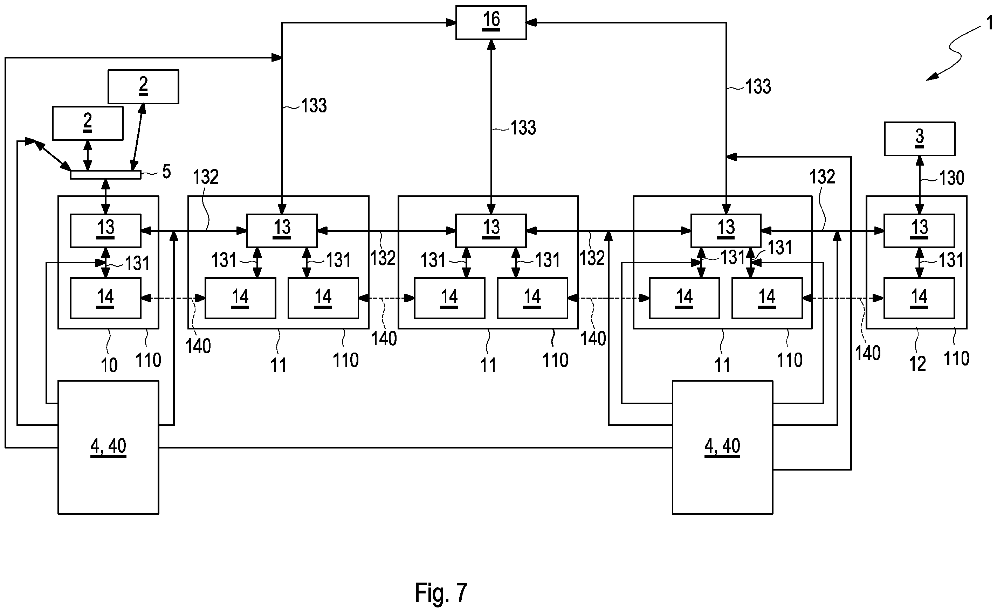

Fig. 7 schematically shows two QKDN analyzer modules 40 according to the invention connected to the QKDN 1 shown in fig. 1. Different from fig. 6, the first QKDN analyzer module 40 is not connected to the application interface 130 of the KMS 13 of the first terminal QKD node 10. Rather is the QKDN analyzer module 40 connected to the switch 5 (see fig. 3).

Both QKDN analyzer modules 40 may be additionally connected to the KMS interface 132 of the respective KMS 13, to the QKD interface 131 of the respective KMS 13 and/or to the control interface 133 of the respective KMS 13.

The first and second QKDN analyzer modules 40 may cooperatively measure, as key system attributes of the QKDN 1, a key store filling degree, a synchronicity of key stores of neighboring KMSs 13, a quantum key delivery rate, a success rate of forwarding the requested keys, a performance of a QKDN controller 16 connected to the control interface 133.

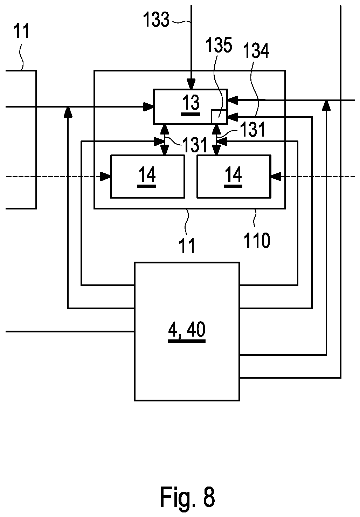

Fig. 8 schematically shows a detail of one QKDN analyzer module 40 shown in fig. 2 according to a fourth embodiment of the invention connected to the QKDN 1 shown in fig. 1. Each KMS 13 may further comprise a secure inspection interface 134 to be connected to for accessing a respective KMS content 135.

At least one of the first and second QKDN analyzer modules 40 is connected to the secure inspection interface 134 of the respective KMS 13. The at least one QKDN analyzer module 40 preferably checks, as a functionality of the QKDN 1, a processing of quantum keys within the respective KMS 13.

Checking the processing advantageously comprises checking a polling of quantum keys, a storing of quantum keys, an ageing of quantum keys and/or a forwarding of quantum keys as key system attributes of the QKDN 1.

### Reference Numerals

- 1: quantum key distribution network, QKDN
- 10: first terminal QKD node
- 11: relay QKD node
- 110: cabinet
- 12: second terminal QKD node
- 13: key management system, KMS
- 130: application interface
- 131: QKD interface
- 132: KMS interface
- 133: control interface
- 134: secure inspection interface
- 135: KMS content
- 14: QKD device
- 140: QKD interface
- 15: virtual machine, VM
- 16: QKDN controller
- 2: first application
- 3: second application
- 4: QKDN analyzer device
- 40: QKDN analyzer module
- 5: switch

## Claims

1. A method for analyzing a quantum key distribution network, QKDN, (1) wherein:
- a first QKDN analyzer module (40) is connected to an application interface (130) of a key management system, KMS, (13) of a first QKD node (10, 11, 12) of a QKDN (1);
- the first QKDN analyzer module (40) requests a plurality of keys from the KMS (13) and measures, as a key system attribute of the QKDN (1), a delivery success rate of the requested keys.

2. The method according to claim 1, wherein the first QKDN analyzer module (40) requests the keys at varying request rates and/or as single keys and/or as a stream of keys and/or the first QKDN analyzer module requests keys having varying key lengths and/or varying key properties.

3. The method according to claim 1 or 2, wherein a second QKDN analyzer module (40) is connected to an application interface (130) of a KMS (13) of a second QKD node (10, 11, 12) of the QKDN (1) and to the first QKDN analyzer module (40).

4. The method according to claim 3, wherein the first and second QKDN analyzer modules (40) cooperatively measure, as key system attributes of the QKDN (1), a delivery delay, a delivery jitter and/or a loss rate of the requested keys and/or check key IDs and/or verify an enforced delivery route of the keys within the QKDN (1).

5. The method according to claim 3 or 4, wherein the first QKDN analyzer module (40) is connected to an application interface (130) of a KMS (13) of a terminal QKD node or of a relay QKD node as the first QKD node (10) and/or the second QKDN analyzer module (40) is connected to an application interface (130) of a KMS (13) of a terminal QKD node or of a relay QKD node as the second QKD node (12).

6. The method according to one of claims 3 to 5, wherein both QKDN analyzer modules (40) are additionally connected to a KMS interface (132) of the respective KMS (13), to a QKD interface (131) of the respective KMS (13) and/or to a control interface (133) of the respective KMS (13).

7. The method according to claim 6, wherein the first and second QKDN analyzer modules (40) cooperatively measure, as key system attributes of the QKDN (1), a key store filling degree, a synchronicity of key stores of neighboring KMSs (13), a quantum key delivery rate, a success rate of forwarding the requested keys, a performance of a QKDN controller (16) connected to the control interface (133).

8. The method according to one of claims 3 to 7, wherein at least one of the first and second QKDN analyzer modules (40) is connected to a secure inspection interface (134) of the respective KMS (13).

9. The method according to claim 8, wherein the at least one QKDN analyzer module (40) checks, as a functionality of the QKDN (1), a processing of quantum keys within the respective KMS (13).

10. The method according to claim 9, wherein checking the processing comprises checking a polling of quantum keys, a storing of quantum keys, an ageing of quantum keys and/or a forwarding of quantum keys as key system attributes of the QKDN (1).

11. A quantum key distribution network, QKDN, analyzer device (4) for analyzing a QKDN (1), comprising a computing device with a QKDN analyzer module (40) configured for carrying out a method according to one of claims 1 to 10 for analyzing the QKDN (1).

12. A quantum key distribution, QKD, node (10, 11, 12) for a QKDN (1), comprising a QKD device (14) and a computing device with a key management system, KMS, (13) and a QKDN analyzer device (4) according to claim 11.

13. A quantum key distribution, QKD, node for a QKDN (1), comprising a a QKD device (14) and a virtual machine, VM, (15) with a key management system, KMS, (13) and a QKDN analyzer module (40) configured for carrying out a method according to one of claims 1 to 10 for analzying the QKDN (1).

14. A quantum key distribution network, QKDN, (1) comprising a QKD node (10, 11, 12) according to claim 12 or 13.

15. A computer program product, comprising a digital storage medium storing a program code, the program code causing a computing device to execute a quantum key distribution network, QKDN, analyzer module (40) carrying out a method according to one of claims 1 to 10 for analyzing a QKDN (1) when being executed by a processor of the computing device, the QKDN analyzer module (40) being connected to a key management system, KMS, (13) of a QKD node (10, 11, 12) of the QKDN (1).

## Amended claims

### Amended claims in accordance with Rule 137(2) EPC.

1. A method for analyzing a quantum key distribution network, QKDN, (1) wherein:
- a first QKDN analyzer module (40) is connected to an application interface (130) of a key management system, KMS, (13) of a first QKD node (10, 11, 12) of a QKDN (1);
- the first QKDN analyzer module (40) requests a plurality of keys from the KMS (13) and measures, as a key system attribute of the QKDN (1), a delivery success rate of the requested keys, the measured delivery success rate indicating a ratio of a number of keys successfully delivered over a number of keys requested.

2. The method according to claim 1, wherein the first QKDN analyzer module (40) requests the keys at varying request rates and/or as single keys and/or as a stream of keys and/or the first QKDN analyzer module requests keys having varying key lengths and/or varying key properties.

3. The method according to claim 1 or 2, wherein a second QKDN analyzer module (40) is connected to an application interface (130) of a KMS (13) of a second QKD node (10, 11, 12) of the QKDN (1) and to the first QKDN analyzer module (40).

4. The method according to claim 3, wherein the first and second QKDN analyzer modules (40) cooperatively measure, as key system attributes of the QKDN (1), a delivery delay, a delivery jitter and/or a loss rate of the requested keys and/or check key IDs and/or verify an enforced delivery route of the keys within the QKDN (1).

5. The method according to claim 3 or 4, wherein the first QKDN analyzer module (40) is connected to an application interface (130) of a KMS (13) of a terminal QKD node or of a relay QKD node as the first QKD node (10) and/or the second QKDN analyzer module (40) is connected to an application interface (130) of a KMS (13) of a terminal QKD node or of a relay QKD node as the second QKD node (12).

6. The method according to one of claims 3 to 5, wherein both QKDN analyzer modules (40) are additionally connected to a KMS interface (132) of the respective KMS (13), to a QKD interface (131) of the respective KMS (13) and/or to a control interface (133) of the respective KMS (13).

7. The method according to claim 6, wherein the first and second QKDN analyzer modules (40) cooperatively measure, as key system attributes of the QKDN (1), a key store filling degree, a synchronicity of key stores of neighboring KMSs (13), a quantum key delivery rate, a success rate of forwarding the requested keys, a performance of a QKDN controller (16) connected to the control interface (133).

8. The method according to one of claims 3 to 7, wherein at least one of the first and second QKDN analyzer modules (40) is connected to a secure inspection interface (134) of the respective KMS (13).

9. The method according to claim 8, wherein the at least one QKDN analyzer module (40) checks, as a functionality of the QKDN (1), a processing of quantum keys within the respective KMS (13).

10. The method according to claim 9, wherein checking the processing comprises checking a polling of quantum keys, a storing of quantum keys, an ageing of quantum keys and/or a forwarding of quantum keys as key system attributes of the QKDN (1).

11. A quantum key distribution network, QKDN, analyzer device (4) for analyzing a QKDN (1), comprising a computing device with a QKDN analyzer module (40) configured for carrying out a method according to one of claims 1 to 10 for analyzing the QKDN (1).

12. A quantum key distribution, QKD, node (10, 11, 12) for a QKDN (1), comprising a QKD device (14) and a computing device with a key management system, KMS, (13) and a QKDN analyzer device (4) according to claim 11.

13. A quantum key distribution, QKD, node for a QKDN (1), comprising a a QKD device (14) and a virtual machine, VM, (15) with a key management system, KMS, (13) and a QKDN analyzer module (40) configured for carrying out a method according to one of claims 1 to 10 for analzying the QKDN (1).

14. A quantum key distribution network, QKDN, (1) comprising a QKD node (10, 11, 12) according to claim 12 or 13.

15. A computer program product, comprising a digital storage medium storing a program code, the program code causing a computing device to execute a quantum key distribution network, QKDN, analyzer module (40) carrying out a method according to one of claims 1 to 10 for analyzing a QKDN (1) when being executed by a processor of the computing device, the QKDN analyzer module (40) being connected to a key management system, KMS, (13) of a QKD node (10, 11, 12) of the QKDN (1).
